# EUROPÄISCHE PATENTSCHRIFT

(11) **EP 2 789 528 B1**
(45) Veröffentlichungstag und Bekanntmachung des Hinweises auf die Patenterteilung: **14.09.2016**
(21) Anmeldenummer: 13001923.5
(22) Anmeldetag: 12.04.2013
(51) Int. Cl.: B62D 55/096, B62D 55/15, E01C 19/12

(54) **Strassenfertiger mit Raupenfahrwerk**
Road paver with endless track units
Finisseuse de route chenillée

(43) Veröffentlichungstag der Anmeldung: 15.10.2014
(73) Patentinhaber: Joseph Vögele AG, 67067 Ludwigshafen (DE)
(72) Erfinder: Pawlik, Christian, 67435 Neustadt (DE); Buschmann, Martin, 67435 Neustadt (DE); Weiser, Ralf, 68526 Ladenburg (DE); Braun, Arthur, 67146 Deidesheim (DE)
(74) Vertreter: Grünecker Patent- und Rechtsanwälte PartG mbB

(56) Entgegenhaltungen:
- EP-A1- 2 548 789
- EP-A2- 0 759 392
- DE-A1- 2 064 454
- JP-A- H10 316 061
- US-A1- 2005 253 453
- US-A1- 2009 152 037

## Beschreibung

Die vorliegende Erfindung betrifft eine Stützrollenanordnung zum Abstützen einer Raupenkette eines Raupenfahrwerks gemäß dem Oberbegriff von Anspruch 1.

Herkömmlicherweise werden Stützrollen aus Stahl verwendet, um in einem Raupenfahrwerk die obere Raupenstrecke einer Raupenkette abzustützen. Dabei rollen die Raupenkettenglieder direkt auf den Stahlrollen ab, was zu einer unerwünschten Geräuschentwicklung am Arbeitsplatz führen kann. Außerdem hat sich herausgestellt, dass es durch den Metall-auf-Metall-Kontakt zwischen den Kettengliedern und den Stahlrollen zu einem erhöhten Verschleiß nicht nur an den Stahlrollen selbst, sondern auch an den Kettengliedern der Raupenkette kommt. Das Beheben solcher Verschleißerscheinungen ist sehr teuer und lässt sich nicht vor Ort auf der Baustelle, sondern nur in einer Werkstatt durchführen. Außerdem können zwischen den Stahlrollen und den Kettengliedern Rostablagerungen entstehen, wenn die Baumaschine mit dem Raupenfahrwerk über längere Zeit draußen auf der Baustelle verbleibt. Dabei kann es vor allem beim Anfahren der Baumaschine zu Absplitterungen auf der Stahlrollenoberfläche kommen, wodurch der Lauf der Raupenkette unruhig und laut wird.

Die EP 1 666 345 B1 offenbart ein Raupenfahrwerk mit einer Stützrollenanordnung, die neben einem Antriebsrad positioniert ist. Die Stützrollenanordnung umfasst eine beidseitig gelagerte Stützrolle, auf der die Raupenkette abrollt. Die Stützrolle weist an ihren äußeren Enden einen vergrößerten Durchmesser auf, an welcher Stelle die Kettenglieder aufliegen.

Die US 2010/0096196 A1 offenbart ein weiteres Raupenfahrwerk. Das Raupenfahrwerk umfasst mehrere Stützrollen, die zwischen einem Antriebsrad und einem Umlenkrad auf einem Träger jeweils beidseitig gelagert angeordnet sind. Als Auflagefläche für die Kettenglieder sind äußere Bereiche der jeweiligen Stützrollen mit einem vergrößerten Durchmesser ausgebildet. Die jeweiligen Stützrollen sind beidseitig in einer Schmierbuchse gelagert. Es ist allerdings schwierig, die Schmierbuchsenlagerung so abzudichten, dass während des Betriebs kein Schmiermittel aus der Lagerung austritt, was zu einem unrunden Lauf der jeweiligen Stützrollen führen könnte.

Die EP 1 798 138 B1 offenbart eine Montagestruktur für eine Tragrolle einer Raupenkette, die auf einem unteren Rahmen des Raupenfahrwerks angebracht ist. Die Montagestruktur umfasst einen Montageteil und einen Halteteil für die Tragrolle. Das Halteteil umfasst einen Klemmverschluss, der so verschraubt werden kann, dass in ihm eine Welle der Tragrolle eingespannt werden kann, auf welcher die Tragrolle drehbar befestigt ist. Nachteilig daran ist, dass durch Erschütterungen während des Betriebs sich der Schraubverschluss lockern kann, wodurch die Tragrolle aus dem Halteteil gegebenenfalls herausrutscht.

DE 2 064 454 A1 offenbart einen gattungsbildenden Straßenfertiger mit einem Raupenfahrwerk. Das Raupenfahrwerk umfasst eine Vielzahl von Kettenlaufrädern, die in Fahrtrichtung gesehen hintereinander angeordnet sind. Die Kettenlaufräder haben einen derart großen Durchmesser, dass sie sowohl zum Führen einer oberen Kettenstrecke als auch zum Führen einer unteren Kettenstrecke der Raupenkette des Raupenfahrwerks geeignet sind.

EP 0 759 392 A2 offenbart eine Laufrolle für Raupenketten, bestehend aus einem Laufrollenkörper, der drehbar auf einer Welle gelagert ist. Die Lager sind insbesondere die Gelenklager mit einer balligen Querschnittskontur ausgebildet, um belastungsbedingten Durchbiegungen des Laufrollenkörpers verkantungsfrei folgen zu können.

US 2005/253 453 A1 offenbart eine Stützrollenanordnung mit einem hohlen Radkranz der drehbar auf einer Welle gelagert ist. Auf dem hohlen Radkranz ist ein Kunststoffring angeordnet.

Es ist nun die Aufgabe der vorliegenden Erfindung, einen Straßenfertiger insbesondere hinsichtliches eines Beschickungsvorganges zu verbessern. Ferner soll das Raupenfahrwerk des Straßenfertigers einen ruhigen Lauf der Raupenkette ermöglichen.

Diese Aufgabe wird gelöst durch einen Straßenfertiger gemäß dem Anspruch 1. Verbesserte Weiterbildungen der Erfindung sind Gegenstand der abhängigen Ansprüche.

Der erfindungsgemäße Straßenfertiger umfasst eine Stützrollenanordnung mit einer Stützrolle, die mindestens einen Auflagekörper aus Kunststoff aufweist. Der Auflagekörper aus Kunststoff ist so auf der Stützrolle vorgesehen, dass auf ihm die Kettenglieder der Raupenkette abrollen. Der Auflagekörper hat die Wirkung eines Dämpfers und kann daher Bewegungen der oberen Raupenstrecke der Raupenkette so abfedern, dass es zu einer reduzierten Geräuschentwicklung kommt. Der Auflagekörper aus Kunststoff zeichnet sich nicht nur während des Betriebs durch seine hervorragenden Dämpfeigenschaften aus, sondern bietet auch während des Stillstands des Raupenfahrwerks eine gewisse Schutzfunktion. Diese Schutzfunktion macht sich vor allem dadurch bemerkbar, dass es bei Baumaschinen, die über längere Zeit draußen auf der Baustelle verbleiben, keine Rostablagerungen mehr zwischen den Stützrollen und den Kettengliedern gibt. Dadurch ist es möglich, das Raupenfahrwerk schonend anzufahren, ohne dass es zu Absplitterungen an der Stützrolle, beziehungsweise an den Kettengliedern kommt.

Bei der Erfindung ist der Auflagekörper aus Polyurethan hergestellt. Polyurethan zeichnet sich insbesondere durch eine hohe Beständigkeit gegen Witterungseinflüsse aus und ist somit hervorragend geeignet für den Einsatz auf der Baustelle. Außerdem zeigt sich das Polyurethan zäh gegen Abrieb und bietet hervorragende Haftungseigenschaften, was insbesondere zum Führen der Raupenkette von Vorteil ist. Ein Auflagekörper aus Polyurethan bietet weiterhin hervorragende Dämpfeigenschaften, wodurch sich Bewegungen der Raupenkette gut abfedern lassen, ohne dass die Lagereinheit der Stützrollenanordnung strapaziert werden würde. Daher ist auch mit einer verlängerten Lebensdauer der Lagereinheit zu rechnen. Um eine besonders abriebfeste Auflage für eine Raupenkette zu bieten, ist der Auflagekörper gemäß einer weiteren Ausführungsform der Erfindung aus Gummi, vornehmlich mit einem Härtegrad größer als 90 Shore ausgebildet.

Neben der hervorragenden Abriebfestigkeit lassen sich durch einen Auflagekörper aus Gummi auch hervorragend Schlagkräfte der Raupenkette abdämpfen, so dass diese nicht auf die Lagereinheit der Stützrollenanordnung übergehen.

Gemäß der Erfindung hat der Auflagekörper einen Außendurchmesser zwischen 40 mm und 100 mm, vornehmlich 50 mm. Dadurch ist die Stützrollenanordnung sehr kompakt. Mit einer solchen Stützrollenanordnung ist es möglich, eine Raupenkette in geringer Höhe relativ zum Boden zu führen. Eine Führung der Raupenkette in geringer Höhe ist vor allem bei Straßenfertigern vorteilhaft, weil der Einbauraum des Raupenfahrwerks nach oben durch den Gutbunker beschränkt ist.

Gemäß einer weiteren Ausführungsform der Erfindung ist der Auflagekörper hohlzylindrisch ausgebildet und weist einen Innendurchmesser zwischen 20 mm und 60 mm auf. Ein Auflagekörper in dieser Größenordnung lässt sich gut herstellen und kann gut an der Stützrolle gekoppelt werden.

Vorzugsweise umfasst die Stützrolle eine Welle, auf welcher der Auflagekörper befestigt ist. Die Welle bietet eine stabile Basis, auf der der Auflagekörper drehfest angeordnet werden kann. Die Welle ist vorzugsweise aus einem Metall ausgebildet, das eine hohe Biegesteifigkeit besitzt. Im Gegensatz zum Auflagekörper gibt die Welle einer Bewegung der Raupenkette nicht nach, wodurch die Lagereinheit entlastet werden kann.

Besonders günstig ist es, wenn der Auflagekörper auf die Welle aufgeschrumpft oder aufgegossen ist. Dadurch kann der Auflagekörper dreh- und rutschfest auf der Welle befestigt werden. Dies ist vorteilhaft, weil auf den Auflagekörper durch das Führen beziehungsweise Tragen der Raupenkette große Kräfte wirken. Eine Drehbarkeit des Auflagekörpers relativ zur Welle ist nicht erwünscht, weil sich dadurch der Auflagekörper besonders stark erhitzt, wodurch er beschädigt werden könnte.

Eine andere Ausführungsform der Erfindung sieht vor, dass die Welle einen Anschlag aufweist, gegen den der Auflagekörper anliegt. Somit ist der Auflagekörper selbst bei großen axialen Querkräften gegen den Anschlag gesichert und kann nicht auf der Welle verrutschen.

Vorzugsweise hat der Anschlag einen geringeren Außendurchmesser als der Auflagekörper. Dadurch kann verhindert werden, dass der Anschlag mit Kettengliedern der Raupenkette kollidiert. Durch diesen Durchmesserunterschied relativ zum Auflagekörper kann auch ein formschlüssiges Aufliegen der Raupenkettenglieder auf der Stützrolle erreicht werden, wodurch sich die Raupenkette positionsgenau und ruhig führen lässt.

Vorteilhaft ist es auch, wenn der Anschlag einen größeren Außendurchmesser als die Welle aufweist, auf der der Auflagekörper angeordnet ist. Dadurch bildet der Anschlag ein besonders robustes Gegenlager für den Auflagekörper.

Gemäß einer weiteren Ausführungsform der Erfindung ist der Anschlag hohlzylindrisch geformt, wobei sein Innendurchmesser im Wesentlichen dem Außendurchmesser der Welle entspricht. Der Anschlag kann somit konzentrisch auf der Welle angeordnet sein, was zu einer ruhigen Führung der Raupenkette führt.

Eine hervorragende Beständigkeit gegen Witterungseinflüsse zeigt der Anschlag dann, wenn er aus Kunststoff, insbesondere aus Polyurethan hergestellt ist. Im Falle, dass der Anschlag wie der Auflagekörper mit Kettengliedern der Raupenkette ständig in Kontakt ist, kann dadurch verhindert werden, dass im Kontaktbereich zu den Kettengliedern Rostablagerungen entstehen. Außerdem wirkt der Anschlag, wenn er aus Kunststoff hergestellt ist, als Schutzhülle für die Welle der Stützrolle.

Besonders fest kann der Anschlag auf der Welle befestigt werden, wenn er auf die Welle aufgeschrumpft oder aufgegossen ist. Dies kann gleichzeitig wie das Aufschrumpfen beziehungsweise Aufgießen des Auflagekörpers oder in einem nachgeordneten, oder vorgezogenen Verfahren geschehen.

Alternativ kann der Anschlag jedoch auch integral mit der Welle ausgebildet sein, beispielsweise einen Guss- oder Drehkörper aus Metall bilden. Dies würde gegebenenfalls zu einer höheren Festigkeit der Stützrolle führen.

Vorstellbar ist es auch, dass der Auflagekörper zumindest abschnittsweise die Welle und auch den Anschlag ummantelt. Dabei bildet der Auflagekörper sowohl einen Schutz für den Anschlag als auch für die Welle, wobei er zusätzlich durch den Anschlag stabil auf der Welle gehalten werden kann.

Vorzugsweise umfasst die Lagereinheit mindestens einen Lagerkörper, der ein Ende der Welle drehbar stützt. Der Lagerkörper kann gut am Raupenfahrwerk befestigt werden und sorgt dafür, dass die Welle gleichmäßig rotiert.

Die Stützrollenanordnung ist im Einsatz besonders ruhig, wenn die Stützrolle mittels eines Rollenlagers an die Lagereinheit gekoppelt ist. Mit dem Rollenlager können große radiale Kräfte gestützt werden, die insbesondere beim Stützen und Führen einer Raupenkette wirken können.

Nach einer besonders bevorzugten Ausführungsform der Erfindung ist das Rollenlager ein Pendelrollenlager. Das Pendelrollenlager hat vor allem den Vorteil, dass es sowohl axial als auch radial in beide Richtungen stark belastbar ist. Außerdem kann das Pendelrollenlager Fluchtfehler oder Durchbiegungen der Stützrolle beziehungsweise der Welle ausgleichen.

Eine weitere Verbesserung der Erfindung sieht vor, dass das Pendelrollenlager einen Innenring aufweist, der gegen den Auflagekörper anliegt. Der Innenring bietet somit eine Rollenlaufbahn für das Pendelrollenlager und gleichzeitig eine Befestigung beziehungsweise Abstützung für den Auflagekörper, was zur Folge hat, dass der Auflagekörper gegen den Innenring gesichert ist und somit stabil auf der Welle befestigt werden kann.

Vorzugsweise umfasst das Pendelrollenlager einen Außenring, der in der Lagereinheit angeordnet ist. Die Lagereinheit bietet für den Außenring ausreichend Schutz und bildet eine stabile Aufnahme für diesen.

Besonders sicher kann das Pendelrollenlager durch eine Spannscheibe an die Lagereinheit gekoppelt werden. Dabei kann die Spannscheibe auch verhindern, dass Schmutz oder Feuchtigkeit in das Pendelrollenlager eindringt.

Der erfindungsgemäße Straßenfertiger hat ein Raupenfahrwerk mit mindestens einer Stützrollenanordnung der zuvor beschriebenen Art. Das Raupenfahrwerk umfasst weiterhin eine Raupenkette mit einer oberen Kettenstrecke und einer unteren Kettenstrecke, wobei die obere Kettenstrecke durchhängend auf der Stützrolle der Stützrollenanordnung aufliegt. Das Durchhängen der oberen Raupenkettenstrecke bedingt ein reduziertes Einbauvolumen des Raupenfahrwerks, was insbesondere bei Straßenfertigern von Vorteil ist. Dies wird anhand der Figuren später beschrieben.

Besonders gut eignet sich das Raupenfahrwerk zum Einsatz an einem Straßenfertiger dann, wenn es so ausgebildet ist, dass die Raupenkette derart von der Stützrollenanordnung führbar ist, dass eine Oberkante der oberen Kettenstrecke der Raupenkette maximal 700 mm, insbesondere 650 mm über einer Unterkante der unteren Kettenstrecke positioniert ist. Im Vergleich zu anderen Raupenfahrwerkhöhen ist die Höhe des hiermit beschriebenen Raupenfahrwerks deutlich geringer und kann daher gut bei einem Straßenfertiger unterhalb eines Gutbunkers verbaut werden.

Beim erfindungsgemäßen Straßenfertiger ist die Oberkante der oberen Kettenstrecke mindestens 50 mm von einem Gutbunkerboden entfernt. Dieser Abstand bildet ein ausreichendes Maß dafür, dass die Raupenkette nicht gegen den Gutbunkerboden schlägt, wobei gleichzeitig eine niedrige Einfüllhöhe des Gutbunkers für die LKW-Beschickung eingehalten werden kann.

Der Gegenstand der Erfindung wird anhand der folgenden Figuren genauer erläutert. Dabei zeigen
- Figur 1: eine Perspektivansicht einer erfindungsgemäßen Stützrollenanordnung,
- Figur 2: eine Draufsicht der Stützrollenanordnung von Figur 1 inklusive teilweiser Schnittdarstellung, und
- Figur 3: einen Straßenfertiger mit einem Raupenfahrwerk und darin verbauten Stützrollenanordnungen gemäß der Erfindung.

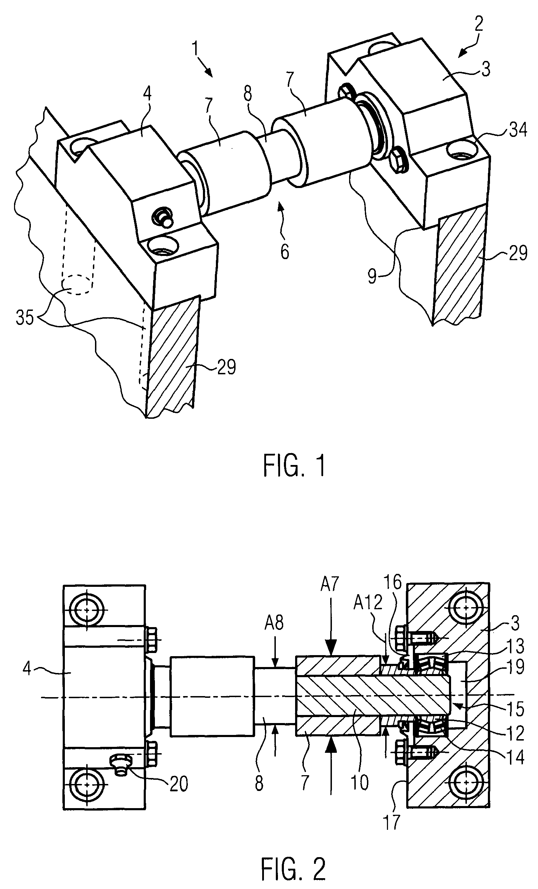

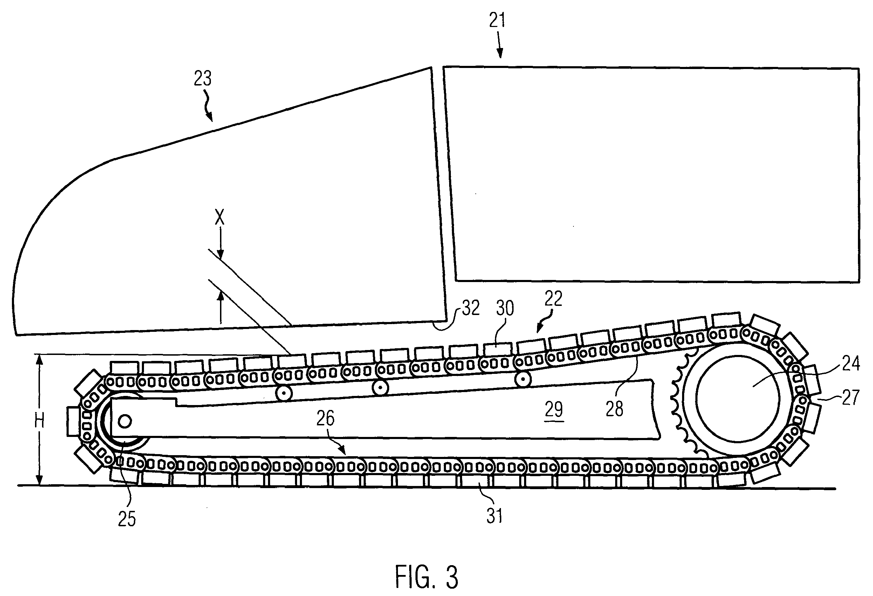

Die Figur 1 zeigt eine Stützrollenanordnung 1 gemäß der Erfindung. Die Stützrollenanordnung 1 zeichnet sich durch eine kompakte Bauweise aus und ist hervorragend geeignet zum Abstützen einer Raupenkette eines Straßenfertigers, was später noch im Zusammenhang mit Figur 3 beschrieben wird.

Die Stützrollenanordnung 1 umfasst eine Lagereinheit 2, die einen ersten Lagerkörper 3 und einen zweiten Lagerkörper 4 enthält. Der erste und der zweite Lagerkörper 3, 4 sind gleich ausgebildet. An den Lagerkörpern 3, 4 sind jeweils zwei Bohrungen 5 vorgesehen, die zur Befestigung der Lagerkörper 3, 4 dienen.

Zwischen den beiden Lagerkörpern 3, 4 ist eine Stützrolle 6 angeordnet. Die Stützrolle 6 ist an ihren Enden drehbar in den Lagerkörpern 3, 4 aufgenommen.

Gemäß der Figur 1 umfasst die Stützrolle 6 zwei Auflagekörper 7, die koaxial nebeneinander angeordnet und durch einen Anschlag 8 voneinander beabstandet sind. Die beiden Auflagekörper 7 haben den gleichen Außendurchmesser A7, der größer ist als der Außendurchmesser A8 des dazwischen angeordneten Anschlags 8.

Weiterhin zeigt die Figur 1 eine jeweils am Boden der Lagerkörper 3, 4 ausgebildete Stoßleiste 9, welche als Widerlager zur Befestigung der Lagerkörper 3, 4 dient. Die Stoßleiste 9 der Lagerkörper 3, 4 hat den Zweck, formschlüssig gegen den in den Figuren 1 und 3 gezeigten Träger 29 des Raupenfahrwerks 22 anzuliegen, so dass eine formschlüssige Bauweise der Stützrollenanordnung 1 relativ zum Träger 29 sichergestellt werden kann. Dies hat insbesondere den Vorteil, dass die Stützrollenanordnung 1 trotz vorkommender Schlagkräfte auf die Raupenkette 26 (siehe Figur 3) sicher am Träger 29 gehalten werden kann und dabei nicht verrutscht. Somit bewirken insbesondere die Stoßleisten 9 der Lagerkörper 3, 4 eine besonders stabile Lagerung der Stützrollenanordnung 1 auf dem Träger 29. In der Figur 1 ist außerdem zu sehen, dass in den Lagerkörpern 3, 4 jeweils zwei Senkrechtbohrungen 34 vorgesehen sind. Die Senkrechtbohrungen 34 können so auf dem Träger 29 ausgerichtet werden, dass sie mit in dem Träger 9 vorgesehenen Gewindebohrungen 35 fluchten. Dadurch kann die Stützrollenanordnung 1 mittels nicht gezeigter Befestigungsschrauben auf dem Träger 29 festgeschraubt werden.

Die Figur 2 zeigt eine Draufsicht der erfindungsgemäßen Stützrollenanordnung 1, einschließlich einer Schnittdarstellung des rechten Bereichs.

In der Figur 2 kann man gut sehen, dass die Stützrolle 6 weiterhin eine Welle 10 umfasst, auf der die Auflagekörper 7 angeordnet sind. Im Folgenden wird nun genau der in der Schnittdarstellung gezeigte Abschnitt der Stützrollenanordnung 1 beschrieben. Diese Beschreibung trifft gleichsam für die andere Hälfte der Stützrollenanordnung 1 zu, die gemäß der Figur 2 nicht im Schnitt dargestellt ist.

In der Figur 2 ist der Auflagekörper 7 hohlzylindrisch ausgebildet und stößt an seiner zum Lagerkörper 3 abgewandten Seite gegen den Anschlag 8. Der Anschlag 8 hat einen größeren Außendurchmesser A8 als die Welle 10 und einen kleineren Außendurchmesser A8 als der hohlzylindrisch ausgebildete Auflagekörper 7. Der Auflagekörper 7 hat vorzugsweise einen Außendurchmesser A7 von 50 mm.

Die Welle 10 ist mittels eines Rollenlagers R, das in Figur 2 als Pendelrollenlager 11 ausgebildet ist, an den Lagerkörper 3 gekoppelt. Das Pendelrollenlager 11 umfasst einen Innenring 12 und einen Außenring 13 und bildet dazwischen eine Rollenlagerlaufbahn für Rollen 14 aus. Im Lagerkörper 3 ist eine Aufnahme 15 ausgebildet, in welcher der Außenring 13 des Pendelrollenlagers 11 vollständig aufgenommen ist.

Der Innenring 12 ist axial breiter ausgebildet als der Außenring 13, wenn auch es auf der Abbildung 2 nicht eindeutig dargestellt ist. Der Innenring 12 ragt in die Aufnahme 15 des Lagerkörpers 3 hinein und erstreckt sich im Wesentlichen bis zu einem Ende der Welle 10. Die Rollenlagerlaufbahn mit den Rollen 14 ist vollständig in der Aufnahme 15 aufgenommen. Der Innenring 12 ragt aus der Aufnahme 15 heraus und erstreckt sich bis zum Auflagekörper 7. Der Innenring 12 kann dadurch verhindern, dass der Auflagekörper 7 auf der Welle 10 nach außen rutscht. Der Auflagekörper 7 ist somit zwischen dem Anschlag 8 und dem Innenring 12 des Pendelrollenlagers 11 eingeschlossen, wodurch der Auflagekörper 7 nicht in Axialrichtung entlang der Welle 10 verschoben werden kann. In dem Bereich, wo der Auflagekörper 7 gegen den Innenring 12 anliegt, kann der Innenring 12 einen vergrößerten Außendurchmesser A12 aufweisen, der im Wesentlichen dem Außendurchmesser A8 des Anschlags 8 entspricht. Der Innenring 12 ist vorzugsweise auf der Welle 10 aufgeschrumpft kann jedoch auch durch andere Befestigungsmittel auf dieser befestigt sein.

Das Pendelrollenlager 11 wird mittels einer Spannscheibe 16 in der Aufnahme 15 gehalten. Die Spannscheibe 16 ist ringförmig ausgebildet und gegen eine Stirnseite 17 des Lagerkörpers 3 geschraubt. Die Spannscheibe 16 drückt den Außenring 13 des Pendelrollenlagers 11 positionsfest in die Aufnahme 15, so dass sich der Außenring 13 nicht in der Aufnahme bewegen kann. Ebenfalls können an der Spannscheibe 16 Mittel zum Abdichten, beispielsweise eine Dichtlippe 18 vorgesehen sein, die zwar eine Drehung des Innenrings 12 relativ zur Spannscheibe 16 zulassen, jedoch ebenfalls verhindern, dass Schmutz beziehungsweise Feuchtigkeit in die Aufnahme 15 eindringt.

Die Aufnahme 15 weist einen Speicher 19 auf. Der Speicher 19 kann ein Schmierfett beziehungsweise ein Schmieröl aufnehmen. Das Schmierfett beziehungsweise das Schmieröl kann dem Speicher 19 über eine Einlassschraube 20 zugeführt werden. Die Einlassschraube 20 ist in der Figur 2 am anderen Lagerkörper 4 gezeigt.

Die Figur 3 zeigt einen Straßenfertiger 21 mit einem Raupenfahrwerk 22 und einem Gutbunker 23. Der Gutbunker 23 ist über einem vorderen Abschnitt des Raupenfahrwerks 22 angeordnet. Das Raupenfahrwerk 22 umfasst ein Antriebsrad 24 und ein Umlenkrad 25. Auf das Antriebsrad 24 und das Umlenkrad 25 ist eine Raupenkette 26 gespannt. Die Raupenkette 26 umfasst ein Profil 27 sowie zahlreiche hintereinander angeordnete Kettenglieder 28. Das Raupenfahrwerk 22 weist weiterhin einen Träger 29 auf, durch den das Raupenfahrwerk 22 am Straßenfertiger 21 befestigt ist.

Die Figur 3 zeigt in schematischer Darstellung, dass auf dem Träger 29 drei Stützrollenanordnungen 1 nebeneinander angeordnet sind. Die Raupenkette 22 umfasst eine obere Kettenstrecke 30, die nach unten durchhängt und von den drei nebeneinander angeordneten Stützrollenanordnungen 1 an den Kettengliedern 28 abgestützt wird. Die Raupenkette 26 umfasst auch eine untere Kettenstrecke 31, die auf dem Untergrund geführt wird.

Der Gutbunker 23 hat einen Gutbunkerboden 32, der oberhalb eines vorderen Abschnitts der oberen Kettenstrecke 30 angeordnet ist. Der Gutbunkerboden 32 ist durch einen Abstand X über der oberen Kettenstrecke 30 angeordnet. Eine obere Kante 33 der oberen Kettenstrecke 30 befindet sich zumindest entlang des Gutbunkerbodens 32 in einer mittleren Höhe H, welche vorzugsweise 650 mm beträgt. Das Führen des oberen Kettenabschnitts 30 unterhalb des Gutbunkerbodens 32 in einer solchen Höhe kann durch die kompakte Bauweise der Stützrollenanordnung erreicht werden. Die Höhe H summiert mit dem Abstand X ergibt maximal 1000 mm, wodurch es möglich ist, den Gutbunker 23 in einer bevorzugten Beschickungshöhe oberhalb des Raupenfahrwerks 22 zu positionieren.

## Patentansprüche

1. Straßenfertiger (21), umfassend ein Raupenfahrwerk (22) mit einem Träger (29), mindestens eine Stützrollenanordnung (1) und eine Raupenkette (26) mit einer oberen Kettenstrecke (30) und einer unteren Kettenstrecke (31), wobei die obere Kettenstrecke (30) durchhängend auf einer Stützrolle der Stützrollenanordnung (1) aufliegt, und wobei die Stützrollenanordnung (1) auf dem Träger (29) angeordnet ist;
wobei die Stützrollenanordnung (1) umfasst:
eine Lagereinheit (2), wobei die Stützrolle drehbar an die Lagereinheit (2) gekoppelt ist und wobei eine Oberkante (O) der oberen Kettenstrecke (30) mindestens 50 mm von einem Gutbunkerboden (32) entfernt ist, wobei die Stützrolle (6) mindestens einen Auflagekörper (7) aus Kunststoff aufweist, der aus Polyurethan hergestellt ist,
**dadurch gekennzeichnet, dass**
die Stützrollenanordnung (1) einen Außendurchmesser (A7) zwischen 40 und 100 mm, vornehmlich 50 mm hat.

2. Straßenfertiger nach Anspruch 1, **dadurch gekennzeichnet, dass** die Stützrolle (6) eine Welle (10) umfasst, auf welcher der Auflagekörper (7) drehfest befestigt ist.

3. Straßenfertiger nach Anspruch 2, **dadurch gekennzeichnet, dass** der Auflagekörper (7) auf die Welle (10) aufgeschrumpft oder aufgegossen ist.

4. Straßenfertiger nach Anspruch 2 oder 3, **dadurch gekennzeichnet, dass** die Stützrolle (6) einen Anschlag (8) aufweist, gegen den der Auflagekörper (7) anliegt.

5. Straßenfertiger nach einem der vorigen Ansprüche 2 bis 4, **dadurch gekennzeichnet, dass**
die Lagereinheit (2) mindestens einen Lagerkörper (3, 4) aufweist, der ein Ende der Welle (10) drehbar stützt.

6. Straßenfertiger nach einem der vorigen Ansprüche, **dadurch gekennzeichnet, dass** die Stützrolle (6) mittels eines Rollenlagers (R) an die Lagereinheit (2) gekoppelt ist.

7. Straßenfertiger nach Anspruch 6, **dadurch gekennzeichnet, dass** das Rollenlager (R) ein Pendelrollenlager (11) ist.

8. Straßenfertiger nach Anspruch 7, **dadurch gekennzeichnet, dass**
das Pendelrollenlager (11) einen Innenring (12) aufweist, der gegen den Auflagekörper (7) anliegt.

9. Straßenfertiger nach Anspruch 8, **dadurch gekennzeichnet, dass**
das Pendelrollenlager (11) einen Außenring (13) umfasst, der in der Lagereinheit (2) angeordnet ist.

10. Straßenfertiger nach einem der Ansprüche 7 bis 9, **dadurch gekennzeichnet, dass**
das Pendelrollenlager (11) durch eine Spannscheibe (16) an die Lagereinheit (2) gekoppelt ist.

11. Straßenfertiger nach einem der vorangehenden Ansprüche, **dadurch gekennzeichnet, dass**
das Raupenfahrwerk (22) so ausgebildet ist, dass die Raupenkette (26) derart von der Stützrollenanordnung (1) führbar ist, dass eine Oberkante (O) der oberen Kettenstrecke (30) der Raupenkette (26) maximal 700 mm über einer Unterkante (U) der unteren Kettenstrecke (31) positioniert ist.

## Claims

1. Road finisher (21) comprising a crawler chassis (22) with a carrier (29), at least one track-supporting roller assembly (1), and a crawler track (26) having an upper crawler section (30) and a lower crawler section (31), wherein the upper crawler section (30) rests on a track-supporting roller (6) of the track-supporting roller assembly (1) in a sagging manner, and wherein the track-supporting roller assembly (1) is arranged on the carrier (29), the track-supporting roller assembly (1) comprising:
a bearing unit (2), wherein the track-supporting roller (6) is rotatably coupled to the bearing unit (2), wherein an upper edge (O) of the upper crawler section (30) is at least 50 mm away from a material bunker bottom (32),
wherein the track-supporting roller (6) comprises at least one supporting body (7) made of plastic, which is made of polyurethane,
**characterized in that**
the track supporting roller assembly (1) comprises
an outer diameter (A7) between 40 mm and 100 mm, specifically 50 mm.

2. Road finisher according claim 1,
**characterized in that**
the track-supporting roller (6) comprises a shaft (10) on which the supporting body (7) is fixed.

3. Road finisher according to claim 2,
**characterized in that**
the supporting body (7) is shrunk or cast onto the shaft (10).

4. Road finisher according to claim 2 or 3,
**characterized in that**
the track-supporting roller (6) comprises a stop (8) against which the supporting body (7) bears.

5. Road finisher according to one of the preceding claims 2 to 4,
**characterized in that**
the bearing unit (2) comprises at least one bearing body (3, 4) which rotatably supports one end of the shaft (10).

6. Road finisher according to one of the preceding claims,
**characterized in that**
the track-supporting roller (6) is coupled to the bearing unit (2) by a roller bearing (R).

7. Road finisher according to claim 6,
**characterized in that**
the roller bearing (R) is a self-aligning roller bearing (11).

8. Road finisher according to claim 7,
**characterized in that**
the self-aligning roller bearing (11) comprises an inner ring (12) which bears against the supporting body (7).

9. Road finisher according to claim 8,
**characterized in that**
the self-aligning roller bearing (11) comprises an outer ring (13) which is arranged in the bearing unit.

10. Road finisher according to one of claims 7 to 9,
**characterized in that**
the self-aligning roller bearing (11) is coupled to the bearing unit (2) by means of a clamping plate (16).

11. Road finisher according to one of the previous claims,
**characterized in that**
the crawler chassis (22) is configured such that the crawler track (26) can be guided by the track-supporting roller assembly (1) such that an upper edge (O) of the upper crawler section (30) of the crawler track (26) is positioned maximally 700 mm above a lower edge (U) of the lower crawler section (31).

## Revendications

1. Finisseur de route (21) comprenant un train de roulement chenillé (22) avec un support (29), au moins un agencement de galet d'appui (1) et une chenille (26) formant un parcours de chenille supérieur (30) et un parcours de chenille inférieur (31), finisseur de route dans lequel le parcours de chenille supérieur (30) repose en suspension libre sur un galet d'appui de l'agencement de galet d'appui (1), et
dans lequel l'agencement de galet d'appui (1) est disposé sur le support (29),
dans lequel l'agencement de galet d'appui (1) comprend une unité de palier (2),
dans lequel le galet d'appui est couplé en rotation à l'unité de palier (2), et
dans lequel un bord supérieur (O) du parcours de chenille supérieur (30) est éloigné d'au moins 50 mm d'un fond de trémie de matériaux (32), et
dans lequel le galet d'appui (6) comprend au moins un corps d'appui (7) en matière plastique, qui est fabriqué en polyuréthanne,
**caractérisé en ce que**
l'agencement de galet d'appui (1) possède un diamètre extérieur (A7) compris entre 40 et 100 mm, de préférence de 50 mm.

2. Finisseur de route selon la revendication 1, **caractérisé en ce que** le galet d'appui (6) comporte un arbre (10) sur lequel est fixé de manière liée en rotation, le corps d'appui (7).

3. Finisseur de route selon la revendication 2, **caractérisé en ce que** le corps d'appui (7) est monté par frettage ou par moulage sur l'arbre (10).

4. Finisseur de route selon la revendication 2 ou la revendication 3, **caractérisé en ce que** le galet d'appui (6) comporte une butée (8) contre laquelle s'appuie le corps d'appui (7).

5. Finisseur de route selon l'une des revendications précédentes 2 à 4, **caractérisé en ce que** l'unité de palier (2) comporte au moins un corps de palier (3, 4), qui supporte en rotation une extrémité de l'arbre (10).

6. Finisseur de route selon l'une des revendications précédentes, **caractérisé en ce que** le galet d'appui (6) est couplé à l'unité de palier (2) au moyen d'un roulement à rouleaux (R).

7. Finisseur de route selon la revendication 6, **caractérisé en ce que** le roulement à rouleaux (R) est un roulement à rotule sur rouleaux (11).

8. Finisseur de route selon la revendication 7, **caractérisé en ce que** le roulement à rotule sur rouleaux (11) présente une bague intérieure (12), qui s'appuie contre le corps d'appui (7).

9. Finisseur de route selon la revendication 8, **caractérisé en ce que** le roulement à rotule sur rouleaux (11) comprend une bague extérieure (13), qui est agencée dans l'unité de palier (2).

10. Finisseur de route selon l'une des revendications 7 à 9, **caractérisé en ce que** le roulement à rotule sur rouleaux (11) est couplé à l'unité de palier (2) par une rondelle de serrage (16).

11. Finisseur de route selon l'une des revendications précédentes, **caractérisé en ce que** le train de roulement chenillé (22) est configuré de manière telle, que la chenille (26) puisse être guidée par l'agencement de galet d'appui (1) de façon à ce que le bord supérieur (O) du parcours de chenille supérieur (30) de la chenille (26) soit positionné au maximum 700 mm au-dessus d'un bord inférieur (U) du parcours de chenille inférieur (31).
